# EUROPEAN PATENT APPLICATION

(11) **EP 4 773 694 A1**
(43) Date of publication of application: **08.07.2026**
(21) Application number: 24864687.9
(22) Date of filing: 12.09.2024
(51) Int. Cl.: H04W 72/0453

(54) **SPECTRUM RESOURCE SCHEDULING METHOD, DEVICE AND SYSTEM**

(30) Priority: 12.09.2023 CN 202311172354
(71) Applicant: HUAWEI TECHNOLOGIES CO., LTD., Shenzhen 518129 (CN)
(72) Inventor: LI, Xiang, Shenzhen, Guangdong 518129 (CN); DAI, Xizeng, Shenzhen, Guangdong 518129 (CN); LI, Ke, Shenzhen, Guangdong 518129 (CN)
(74) Representative: Goddar, Heinz J.
(86) International application number: PCT/CN2024/118447
(87) International publication number: WO 2025/055973

(57) **Abstract**

This application provides a spectrum resource scheduling method, a device, and a system. The method includes: sending a first request message to a first base station, where the first request message is used for requesting the first base station to authorize use of a first spectrum resource, and the first spectrum resource is determined based on a service scheduling requirement and a frequency band supported by the first base station; receiving a first authorization message, where the first authorization message indicates the first spectrum resource that is authorized by the first base station for use; sending a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and accepting service scheduling of the second base station on a second spectrum resource, where the second spectrum resource includes the first spectrum resource, or the second spectrum resource includes the first spectrum resource and the third spectrum resource. A larger transmission bandwidth can be provided without changing spectrum resource allocation of an operator.

## Description

This application claims priority to Chinese Patent Application No. 202311172354.X, filed with the China National Intellectual Property Administration on September 12, 2023 and entitled "SPECTRUM RESOURCE SCHEDULING METHOD, DEVICE, AND SYSTEM", which is incorporated herein by reference in its entirety.

### TECHNICAL FIELD

This application relates to the field of wireless communication, and in particular, to a spectrum resource scheduling method, a device, and a system.

### BACKGROUND

With the development of wireless applications, large-bandwidth service requirements that need to be satisfied are increasing, and are widely applied. The large-bandwidth service requirements include large-bandwidth cloud collaboration services on an uplink (Uplink, UL) of a cell, for example, uploading photos to the cloud, and performing cloud gaming. In a current wireless communication system, there are base stations deployed by a plurality of operators, and each base station can only provide a spectrum resource for a user equipment (User Equipment, UE) based on a spectrum resource actually allocated to an operator.

However, because spectrum resources that belong to different frequency band ranges and that are allocated to each operator are limited, and each operator operates independently, a base station correspondingly deployed by one operator can provide limited spectrum resources for the UE, and sometimes cannot provide a corresponding spectrum resource based on a large-bandwidth service requirement of the UE.

### SUMMARY

This application provides a spectrum resource scheduling method, a device, and a system, to provide a larger spectrum resource, that is, a larger transmission bandwidth, based on a requirement of a UE without changing spectrum resource allocation of an operator.

According to a first aspect, this application provides a spectrum resource scheduling method, including: sending a first request message to a first base station, where the first request message is used for requesting the first base station to authorize use of a first spectrum resource, and the first spectrum resource is determined based on a service scheduling requirement and a frequency band supported by the first base station; receiving a first authorization message, where the first authorization message indicates the first spectrum resource that is authorized by the first base station for use; sending a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and accepting service scheduling of the second base station on a second spectrum resource, where the second spectrum resource includes the first spectrum resource, or the second spectrum resource includes the first spectrum resource and the third spectrum resource.

Base stations deployed by operators each have a capability of performing service scheduling on a frequency band allocated to each operator. However, each operator operates independently. Therefore, a base station deployed by one operator can perform service scheduling only in a frequency range allocated to the operator. Because a spectrum resource allocated to each operator is limited, even if one UE can be served by a plurality of operators, only one base station can perform service scheduling each time on a spectrum resource authorized to an operator to which the base station belongs. Therefore, the spectrum resource that can be used by the UE is limited. Once the UE needs to perform transmission of a large quantity of services, the spectrum resource is insufficient. According to the spectrum resource scheduling method provided in this application, a plurality of base stations serving the UE authorize the UE to use spectrum resources corresponding to the base stations, so that the UE can obtain sufficient spectrum resources for service transmission. As described in the method, the first base station authorizes the UE to use the first spectrum resource. When the UE request the second base station for a spectrum resource, the second base station may learn of the first spectrum resource authorized by the first base station, and determine to perform service scheduling for the UE on the second spectrum resource. The second spectrum resource includes the first spectrum resource and the third spectrum resource in a corresponding frequency range allocated to the second base station. If the first spectrum resource is insufficient to satisfy a service scheduling requirement of the UE for a sufficient spectrum resource, the second spectrum resource determined by the second base station may include the entire first spectrum resource and the third spectrum resource allocated by the second base station for an insufficient part, to resolve a problem that a spectrum resource that can be provided by the first base station for a current service scheduling requirement of the UE is insufficient, effectively increase a total quantity of services of service scheduling, and resolve a problem of an insufficient bandwidth. If the first base station can provide a sufficient spectrum resource, the second spectrum resource may include only the first spectrum resource, and the first spectrum resource may also be scheduled by the second base station. In this way, it is more convenient for the UE to flexibly select base stations corresponding to different operators to perform service scheduling. For example, the UE may select a base station with a better signal strength to implement the current service scheduling requirement.

Optionally, the UE first sends the first request message to the first base station to obtain authorization of the first spectrum resource, and then informs the second base station of the authorized first spectrum resource. The second base station determines the third spectrum resource based on the first spectrum resource that has been authorized for use, the service scheduling requirement, and the frequency band supported by the second base station. For example, the UE needs to request transmission of a service of 50 M, and the first base station authorizes a first spectrum resource needed for transmission of a service of 40 M. Based on the service of 50 M that the UE needs to transmit in total and the first spectrum resource that is authorized by the first base station and that is needed for transmission of the service of 40 M, the second base station may determine to allocate, to the UE on the frequency band supported by the second base station, a third spectrum resource that is needed for transmission of a remaining service of 10 M. In this case, the second spectrum resource includes the first spectrum resource for transmission of the service of 40 M and the third spectrum resource for transmission of the service of 10 M. The second base station may perform service scheduling for the UE on the second spectrum resource.

Optionally, the UE may separately send the first request message to the first base station to obtain authorization of the first spectrum resource, and send the second request message to the second base station to obtain authorization of the third spectrum resource. In this case, the first base station determines the first spectrum resource based on the service scheduling requirement and the frequency band supported by the first base station, and the second base station determines the third spectrum resource based on the service scheduling requirement and the frequency band supported by the second base station.

In a possible implementation, the method further includes: receiving a second authorization message, where the second authorization message indicates the third spectrum resource that is authorized by the second base station for use; sending, to a target base station based on the first authorization message and the second authorization message, a first message indicating the first spectrum resource and the third spectrum resource, to cause the target base station to determine the second spectrum resource based on the first message and perform service scheduling on the second spectrum resource, where the target base station is the first base station or the second base station; and accepting the service scheduling of the target base station on the second spectrum resource.

In this application, a UE has a capability of accessing base stations deployed by a plurality of operators, for example, two different operators. The UE separately sends a request message to the two operators to obtain spectrum resources authorized by base stations corresponding to the two operators, and then selects one of the base stations as the target base station to perform unified scheduling on the authorized spectrum resource. That is, unified scheduling of spectrum resources between different operators is implemented by using a spectrum resource that has been authorized by the first base station or the second base station. This method does not affect independent operation between different operators, and does not increase operating costs like spectrum resource change. According to the method, the target base station may flexibly configure a spectrum resource, to improve spectrum resource utilization and flexibility without affecting an existing network or changing spectrum resource allocation, and effectively resolve a problem that a bandwidth provided by an operator that operates independently for service scheduling of the UE is insufficient.

According to a second aspect, this application provides a spectrum resource scheduling method, including: receiving a first request message sent by a UE, where the first request message is used for requesting a first base station to authorize use of a first spectrum resource; and if determining, based on a service scheduling requirement of the UE and a frequency band supported by the first base station, to authorize the UE to use the first spectrum resource, sending a first authorization message to the UE, where the first authorization message indicates the first spectrum resource that is authorized by the first base station for the use.

In a possible implementation, if the UE selects the first base station as a target base station, a first message sent to the first base station includes the first spectrum resource that has been authorized by the first base station and a third spectrum resource that has been authorized by a second base station. The first base station aggregates spectrum resources and performs service scheduling on the second spectrum resource. The method further includes: if receiving the first message, determining a second spectrum resource based on the first spectrum resource and the third spectrum resource that are indicated by the first message, where the first message is obtained by the UE based on the first authorization message and a second authorization message that are received; the second spectrum resource includes the first spectrum resource, or the second spectrum resource includes the first spectrum resource and the third spectrum resource; the second authorization message is sent by the second base station to the UE based on a second request message of the UE; and the third spectrum resource is a spectrum resource authorized by the second base station for use; and performing service scheduling for the UE on the second spectrum resource.

Optionally, the first base station determines the first spectrum resource based on the service scheduling requirement and the frequency band supported by the first base station.

In a possible implementation, the method further includes: reconfiguring a bandwidth part (Bandwidth Part, BWP) of the UE based on the second spectrum resource. For example, after the second spectrum resource is obtained through aggregation, the BWP of the UE may be further modified or reconfigured based on the second spectrum resource, that is, a spectrum resource actually used for performing service scheduling for the UE.

In a possible implementation, each operator independently constructs a network and operates independently, and has no interconnection and interworking. Therefore, the method further includes: performing synchronization before using a spectrum resource that has been authorized, so that time-frequency synchronization is ensured, and spectrum resources of different operators can be uniformly coordinated and scheduled.

According to a third aspect, this application provides a spectrum resource scheduling method, including: receiving a second request message sent by user equipment UE, where the second request message is used for requesting a second base station to authorize use of a third spectrum resource and informing the second base station of a first spectrum resource that has been authorized for use, the third spectrum resource is determined based on a service scheduling requirement and a frequency band supported by the second base station, and the first spectrum resource is determined by a first base station based on the service scheduling requirement and a frequency band supported by the first base station; and performing service scheduling for the UE on a second spectrum resource based on the second request message, where the second spectrum resource includes the first spectrum resource, or the second spectrum resource includes the first spectrum resource and the third spectrum resource.

In a possible implementation, if the UE selects the second base station as a target base station, a first message sent to the second base station includes the first spectrum resource that has been authorized by the first base station and the third spectrum resource that has been authorized by the second base station. The second base station aggregates spectrum resources and performs service scheduling on the second spectrum resource. The method further includes: sending a second authorization message to the UE, where the second authorization message indicates the third spectrum resource that is authorized by the second base station for use; if receiving the first message, determining the second spectrum resource based on the first spectrum resource and the third spectrum resource that are indicated by the first message, where the first message is obtained by the UE based on a first authorization message and the second authorization message that are received, the first authorization message is sent by the first base station to the UE based on a first request message of the UE, and the first request message is used for requesting the first base station to authorize use of the first spectrum resource; and performing service scheduling for the UE on the second spectrum resource.

Optionally, the second base station determines the third spectrum resource based on the first spectrum resource that has been authorized for use, the service scheduling requirement, and the frequency band supported by the second base station. Alternatively, the second base station determines the third spectrum resource based on the service scheduling requirement and the frequency band supported by the second base station.

In a possible implementation, a BWP of the UE is reconfigured based on the second spectrum resource.

In a possible implementation, the method further includes: performing synchronization before using a spectrum resource that has been authorized, so that time-frequency synchronization is ensured, and spectrum resources of different operators can be uniformly coordinated and scheduled.

According to a fourth aspect, this application provides a UE, including: a sending module, configured to send a first request message to a first base station, where the first request message is used for requesting the first base station to authorize use of a first spectrum resource, and the first spectrum resource is determined based on a service scheduling requirement and a frequency band supported by the first base station; and a receiving module, configured to receive a first authorization message, where the first authorization message indicates the first spectrum resource that is authorized by the first base station for use. The sending module is further configured to send a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station. The receiving module is further configured to accept service scheduling of the second base station on a second spectrum resource, where the second spectrum resource includes the first spectrum resource, or the second spectrum resource includes the first spectrum resource and the third spectrum resource.

In a possible implementation, the receiving module is further configured to receive a second authorization message, where the second authorization message indicates the third spectrum resource that is authorized by the second base station for use. The sending module is further configured to send, to a target base station based on the first authorization message and the second authorization message, a first message indicating the first spectrum resource and the third spectrum resource, to cause the target base station to determine the second spectrum resource based on the first message and perform service scheduling on the second spectrum resource, where the target base station is the first base station or the second base station. The receiving module is further configured to accept the service scheduling of the target base station on the second spectrum resource.

The UE is configured to perform some or all of the operations according to any one of the first aspect and the possible implementations of the first aspect.

According to a fifth aspect, this application provides a first base station, including: a receiving module, configured to receive a first request message sent by a user equipment UE, where the first request message is used for requesting a first base station to authorize use of a first spectrum resource; and a sending module, configured to: if a processing module determines, based on a service scheduling requirement of the UE and a frequency band supported by the first base station, to authorize the UE to use the first spectrum resource, send a first authorization message to the UE, where the first authorization message indicates the first spectrum resource that is authorized by the first base station for use.

In a possible implementation, the first base station further includes: the processing module, further configured to: if the receiving module receives a first message, determine a second spectrum resource based on the first spectrum resource and a third spectrum resource that are indicated by the first message, where the first message is obtained by the UE based on the first authorization message and a second authorization message that are received; the second spectrum resource includes the first spectrum resource, or the second spectrum resource includes the first spectrum resource and the third spectrum resource; the second authorization message is sent by a second base station to the UE based on a second request message of the UE; and the third spectrum resource is a spectrum resource authorized by the second base station for use; and a scheduling module, configured to perform service scheduling for the UE on the second spectrum resource.

In a possible implementation, the processing module is further configured to reconfigure a BWP of the UE based on the second spectrum resource.

The first base station is configured to perform some or all operations according to any one of the second aspect and the possible implementations of the second aspect.

According to a sixth aspect, this application provides a second base station, including: a receiving module, configured to receive a second request message sent by a user equipment UE, where the second request message is used for requesting the second base station to authorize use of a third spectrum resource and informing the second base station of a first spectrum resource that has been authorized for use, the third spectrum resource is determined based on a service scheduling requirement and a frequency band supported by the second base station, and the first spectrum resource is determined by a first base station based on the service scheduling requirement and a frequency band supported by the first base station; and a scheduling module, configured to perform service scheduling for the UE on a second spectrum resource based on the second request message, where the second spectrum resource includes the first spectrum resource, or the second spectrum resource includes the first spectrum resource and the third spectrum resource.

In a possible implementation, the second base station further includes: a sending module, configured to send a second authorization message to the UE, where the second authorization message indicates the third spectrum resource that is authorized by the second base station for use; and a processing module, further configured to: if the receiving module receives a first message, determine the second spectrum resource based on the first spectrum resource and the third spectrum resource that are indicated by the first message. The scheduling module is further configured to perform service scheduling on the second spectrum resource determined by the processing module. The first message is obtained by the UE based on a first authorization message and the second authorization message that are received. The first authorization message is sent by the first base station to the UE based on a first request message of the UE. The first request message is used for requesting the first base station to authorize use of the first spectrum resource.

In a possible implementation, the processing module is further configured to reconfigure a BWP of the UE based on the second spectrum resource.

The second base station is configured to perform some or all operations according to any one of the third aspect and the possible implementations of the third aspect.

According to a seventh aspect, this application provides an apparatus, including a transceiver unit and at least one processing unit. When the at least one processing unit executes a program or instructions, the apparatus implements some or all operations according to any one of the first aspect and the possible implementations of the first aspect, some or all operations according to any one of the second aspect and the possible implementations of the second aspect, or some or all operations according to any one of the third aspect and the possible implementations of the third aspect. The apparatus may be a UE or a base station, or may be a chip in the UE or the base station.

According to an eighth aspect, this application provides a device. The device may be a first device, a second device, or a third device. The device includes at least one processor and a transceiver. The at least one processor is coupled to the transceiver. When at least one processor executes a program or instructions, the first device implements some or all operations according to any one of the first aspect and the possible implementations of the first aspect, the second device implements some or all operations according to any one of the second aspect and the possible implementations of the second aspect, and the third device implements some or all operations according to any one of the third aspect and the possible implementations of the third aspect. The device may be a UE or a base station, or may be a chip in the UE or the base station.

According to a ninth aspect, this application provides a device. The device includes a communication port and a processor. The communication port is configured to perform the method according to any one of the foregoing aspects and receiving and sending operations in any possible implementation of any one of the foregoing aspects. The processor is configured to perform the method according to any one of the foregoing aspects and an operation other than receiving and sending operations in any possible implementation of any one of the foregoing aspects.

According to a tenth aspect, this application provides a system. The system includes a UE, a first base station, and a second base station. The first base station is configured to perform some or all operations according to any one of the first aspect and the possible implementations of the first aspect. The second base station is configured to perform some or all operations according to any one of the second aspect and the possible implementations of the second aspect. The third base station is configured to perform some or all operations according to any one of the third aspect and the possible implementations of the third aspect.

According to an eleventh aspect, this application provides a computer-readable storage medium. The computer-readable storage medium stores instructions. When the instructions are run on a processor, the method according to any one of the foregoing aspects and some or all operations included in any possible implementation of any one of the foregoing aspects are implemented.

According to a twelfth aspect, this application provides a computer program product. The computer program product includes instructions. When the instructions are run on a processor, the method according to any one of the foregoing aspects and some or all operations included in any possible implementation of any one of the foregoing aspects are implemented.

According to a thirteenth aspect, this application provides a chip, including a port circuit and a processor. The port circuit is connected to the processor. The processor is configured to cause the chip to perform the method according to any one of the foregoing aspects and some or all operations included in any possible implementation of any one of the foregoing aspects.

### BRIEF DESCRIPTION OF DRAWINGS

To describe the technical solutions in embodiments of this application more clearly, the following briefly describes the accompanying drawings needed for describing embodiments of this application. Apparently, the accompanying drawings in the following descriptions show merely some embodiments of this application, and a person of ordinary skill in the art may still derive other drawings from these accompanying drawings without creative efforts.
FIG. 1 is an example diagram of a frequency range that is separately allocated to an operator in a frequency band according to an embodiment of this application;
FIG. 2 is a schematic flowchart of a spectrum resource scheduling method according to an embodiment of this application;
FIG. 3 is a diagram of a scenario architecture according to an embodiment of this application;
FIG. 4 is a schematic flowchart of another spectrum resource scheduling method according to an embodiment of this application;
FIG. 5 is an example diagram of another frequency range that is separately allocated to an operator in a frequency band according to an embodiment of this application;
FIG. 6 is a schematic flowchart of another spectrum resource scheduling method according to an embodiment of this application;
FIG. 7 is a diagram of a structure of a UE according to an embodiment of this application;
FIG. 8 is a diagram of a structure of a first base station according to an embodiment of this application;
FIG. 9 is a diagram of a structure of a second base station according to an embodiment of this application;
FIG. 10 is a diagram of a structure of an apparatus 40 according to an embodiment of this application;
FIG. 11 is a diagram of a structure of a first device 50 according to an embodiment of this application;
FIG. 12 is a diagram of a structure of a second device 60 according to an embodiment of this application;
FIG. 13 is a diagram of a structure of a second device 70 according to an embodiment of this application;
FIG. 14 is a diagram of a structure of a device 80 according to an embodiment of this application; and
FIG. 15 is a diagram of a structure of a system according to an embodiment of this application.

### DESCRIPTION OF EMBODIMENTS

To make a person skilled in the art understand the solutions in this application better, the following clearly and completely describes the technical solutions in embodiments of this application with reference to the accompanying drawings in embodiments of this application. It is clear that the described embodiments are merely some rather than all of embodiments of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular sequence of the objects. For example, a first target object, a second target object, and the like are used to distinguish between different target objects, rather than describing a particular sequence of the target objects.

In embodiments of this application, terms "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

In descriptions of embodiments of this application, unless otherwise stated, "a plurality of" means two or more than two. For example, a plurality of processing units mean two or more processing units, and a plurality of systems mean two or more systems.

For ease of understanding, the following first explains and describes related nouns or terms used in embodiments of this application.

### 1. Large bandwidth

Generally, a server bandwidth of 100 Mbps or 1000 Mbps may be defined as a large bandwidth. A service that uses the large bandwidth is generally a service for a user that consumes a large bandwidth and has a high traffic resource requirement, for example, a video, a short video, or cloud video watching.

### 2. Bandwidth (bandwidth)

A bandwidth generally refers to a frequency band width occupied by a signal. Wireless communication is based on a frequency domain, and a communication channel between devices (including a base station, a UE, and the like) is based on a frequency of an electromagnetic wave. It may be understood as that a band (band) for information transmission between devices is an electromagnetic wave, and a bandwidth may be generally represented by MHz.

### 3. Carrier aggregation (Carrier Aggregation, CA)

One or more independent carriers are aggregated to obtain a larger transmission bandwidth.

### 4. Intra-band carrier aggregation (Intra-band CA)

Different carriers in a same band (band) are aggregated, and aggregation includes contiguous carrier aggregation and non-contiguous carrier aggregation.

### 5. Inter-band carrier aggregation (Inter-band CA)

Carriers in different bands are aggregated.

### 6. BWP

A BWP is a bandwidth subset of a total cell bandwidth. UE receive and transmit bandwidths are adaptively adjusted by using a bandwidth in a new radio (New Radio, NR) technology. In this case, the UE receive and transmit bandwidths do not need to be as large as the cell bandwidth.

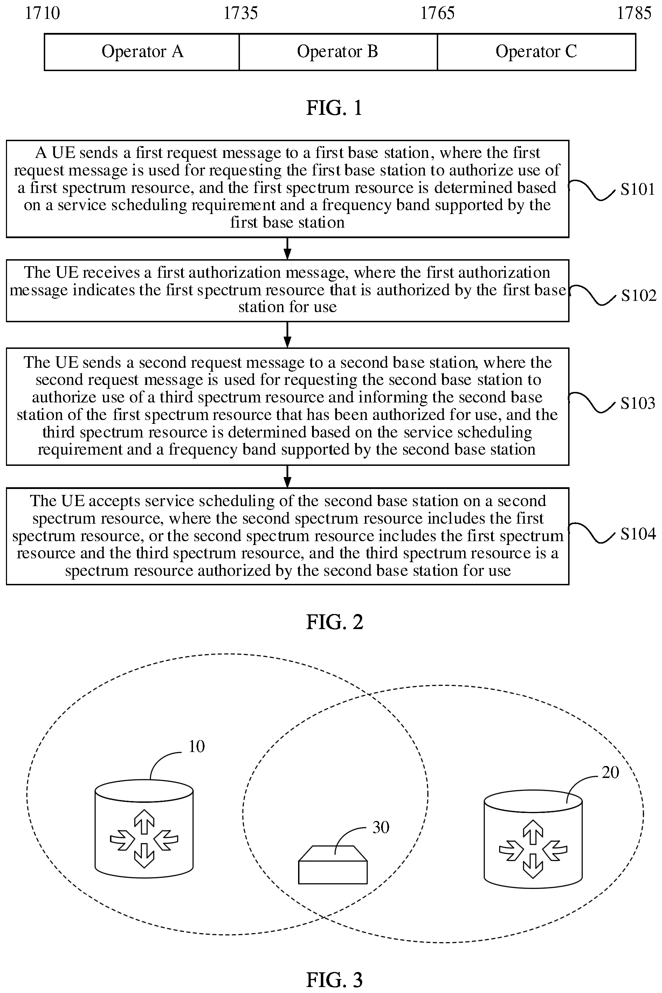

A spectrum resource scheduling method provided in embodiments of this application may be applied to a wireless communication scenario. In a wireless communication network, spectrum resources in different frequency ranges in a same frequency band (that is, a same band (band)) or different frequency bands may be allocated to different operators, and the different operators operate independently. A spectrum resource that can be allocated to each operator is limited. For example, a frequency band n3 includes a spectrum resource of 1710 MHz-1785 MHz. As shown in FIG. 1, n3 is a frequency band or band (band). It is assumed that the frequency band n3 is allocated to three operators for independent operation, a frequency band allocated to an operator A is 1710 MHz-1735 MHz, a frequency band allocated to an operator B is 1735 MHz-1765 MHz, and a frequency band allocated to an operator C is 1765 MHz-1785 MHz. Based on division of the frequency band, a base station deployed (disposed) by each operator performs service scheduling for a UE only in a frequency range corresponding to the operator.

In some examples, base stations deployed by operators each have a capability of performing service scheduling on the entire frequency band n3 (that is, in 1710 MHz-1785 MHz). However, each operator operates independently. Therefore, a base station deployed by one operator can implement service scheduling only through spectrum resource allocation in a frequency range allocated to the operator. With reference to allocation in FIG. 1, a base station deployed by the operator A can perform service scheduling only in the frequency range 1710 MHz-1735 MHz authorized to the operator A, a base station deployed by the operator B can perform service scheduling only in the frequency range 1735 MHz-1765 MHz authorized to the operator B, and a base station deployed by the operator C can perform service scheduling only in the frequency range 1765 MHz-1785 MHz authorized to the operator C. A UE may access a base station deployed by at least one operator, and is served by the at least one operator to perform service scheduling. For example, if a UE purchases a SIM card 1 of the operator A and a SIM card 2 of the operator B to access a network, so as to implement a service transmission requirement, when the UE accesses the network by using the SIM card 1, service scheduling may be performed in 1710 MHz-1735 MHz by using the base station deployed by the operator A; and when the UE accesses the network by using the SIM card 2, service scheduling may be performed in 1735 MHz-1765 MHz by using the base station deployed by the operator B. It can be learned from the foregoing descriptions that, a spectrum resource allocated to each operator is limited, and even if one UE can be served by a plurality of operators, when accessing one base station, service scheduling can be performed only on a spectrum resource allocated to an operator to which the base station belongs. Therefore, the spectrum resource that can be used by the UE is limited.

Generally, a scheduling policy of the service scheduling includes scheduling of a quantity of multiple-input multiple-output (Multiple-Input Multiple-Output, MIMO) layers (Layers or Ranks), a modulation order (Modulation order), a code rate (code rate), and a bandwidth (Bandwidth). It is assumed that a UE is in a cell coverage area of one base station, and service scheduling needs to be performed on a service A. A scheduling policy of the service A may include: performing data transmission by using a plurality of layers and setting a modulation order (quadrature phase shift keying (Quadrature Phase Shift Keying, QPSK), 16-quadrature amplitude modulation (Quadrature Amplitude Modulation, QAM), 64-QAM, 256-QAM, 1024-QAM, or the like), a code rate, and a specific bandwidth (MHz). In some examples, if service scheduling is performed on the service A of the UE, the UE is located at a cell edge, and a signal at the cell edge is weak, to retain performance, a scheduling policy of the base station is adjusted. Generally, a quantity of MIMO layers and a modulation order and/or a code rate may be reduced, and a transmission bandwidth may be increased. This is because the quantity of MIMO layers, the modulation order, and the code rate are greatly affected by a network signal strength, and are correspondingly reduced at a position with a weak signal, so that data transmission performance can be ensured. When the quantity of MIMO layers and the modulation order and/or the code rate are reduced, an amount of data that needs to be transmitted by the UE is positively correlated with the bandwidth. In other words, if service scheduling is performed on a specific service, for example, the service A, of the UE, and a large quantity of services needs to be transmitted, the bandwidth needs to be increased to ensure a transmission capability.

Embodiments of this application provide a spectrum resource scheduling method. When a spectrum resource that can be used by a UE is limited, and a large quantity of services needs to be transmitted, a larger spectrum resource, that is, a larger bandwidth, is provided based on a requirement of the UE. In this method, different operators can share a spectrum resource through the UE without changing spectrum resource allocation of the operators, and a larger transmission bandwidth is provided based on a service requirement of the UE, to ensure transmission of the quantity of services. FIG. 2 is a schematic flowchart of a spectrum resource scheduling method according to an embodiment of this application. As shown in FIG. 2, the method is performed by a UE, and includes but is not limited to steps S101 to S104.

FIG. 3 is a diagram of a scenario architecture according to an embodiment of this application. A scenario provided in FIG. 3 is used as an example for description. Refer to FIG. 1. It is assumed that a UE 30 has SIM cards of an operator A and an operator B, in other words, can schedule services on spectrum resources of the operator A and the operator B. As shown in FIG. 3, a base station disposed by the operator A is a first base station 10, a base station disposed by the operator B is a second base station 20, and the UE 30 is in a network signal coverage area of the first base station 10 and the second base station 20.

S101: The UE sends a first request message to the first base station, where the first request message is used for requesting the first base station to authorize use of a first spectrum resource, and the first spectrum resource is determined based on a service scheduling requirement and a frequency band supported by the first base station.

The service scheduling requirement means that when the UE needs to perform service transmission, the UE requests a network to allocate a spectrum resource needed for service transmission. For example, refer to the scenario in FIG. 3. The UE 30 may access the first base station 10 and the second base station 20 simultaneously, or may first correspondingly access the first base station 10 or the second base station 20 based on an operator that the UE currently needs to use, and then switch to the other base station for access when necessary. If the UE has accessed the second base station of the operator B, the UE requests the second base station to allocate a spectrum resource needed for service transmission.

An example in which the UE has accessed the second base station to perform service scheduling is used. If a current service scheduling requirement of the UE is that a quantity of services for transmission is 50 M, and the UE is located at a cell edge of a cell covered by the second base station, in a case of a low code rate, for example, QPSK, and one-layer transmission, a bandwidth allocated to the second base station cannot satisfy the large-bandwidth service scheduling requirement. The UE may determine, based on a case of a poor network condition, for example, network freezing, during current service transmission, that the bandwidth that can be provided by the second base station is insufficient, and send the first request message to the first base station. The first request message may carry a quantity of services that the UE needs to transmit and/or a request for obtaining use permission of the first spectrum resource corresponding to transmission of the quantity of services. If the first base station authorizes the use of the first spectrum resource, after the UE that is authorized informs the second base station of the authorized first spectrum resource, the second base station can extend and schedule more spectrum resources to satisfy the current service scheduling requirement. Alternatively, the UE may first inform the second base station of the current service scheduling requirement of the UE, for example, inform the second base station that a service of 500 M needs to be scheduled currently. The second base station receives the current service scheduling requirement of the UE, determines, based on the service scheduling requirement, that the bandwidth that can be provided for the UE is insufficient for scheduling the service of 500 M, and feeds back, to the UE, a message indicating that a bandwidth resource is insufficient. After receiving the message, the UE sends the first request message to the first base station to request for authorization of the use of the first spectrum resource, so that the second base station can extend and schedule more spectrum resources to satisfy the current service scheduling requirement.

The first request message is used for requesting the first base station to authorize the use of the first spectrum resource. If the first base station authorizes the UE to use the first spectrum resource, the first base station no longer performs service scheduling on the first spectrum resource. For example, refer to FIG. 1. The first request message is used for requesting the first base station to determine a part of a spectrum resource from the allocated frequency band (for example, 1710 MHz-1735 MHz) to be used as the first spectrum resource. After the first base station agrees to the request of the first request message and authorizes the first spectrum resource to the UE, the UE may inform another base station like the second base station that service scheduling may be performed on the first spectrum resource. After authorizing the first spectrum resource, the first base station no longer uses the first spectrum resource to perform service scheduling, thereby avoiding a case in which base stations deployed by two different operators use the first spectrum resource simultaneously to perform service scheduling.

Optionally, before sending the first request message to the first base station, the UE may further inform the first base station of the current service scheduling requirement of the UE. For example, the UE may separately send a message to the first base station to inform the service scheduling requirement, or include the service scheduling requirement in the first request message. For example, the first request message is for requesting the first base station to authorize the use of the first spectrum resource for transmission of a quantity of services of 500 M.

The spectrum resource scheduling method provided in this embodiment of this application may be applied to service scheduling on a UL spectrum resource when the UE needs a large-bandwidth service, or may be applied to service scheduling on a downlink (Downlink, DL) spectrum resource. In this embodiment, an UL is used as an example for description. For a DL method, refer to the UL. Details are not described herein.

S102: The UE receives a first authorization message, where the first authorization message indicates the first spectrum resource that is authorized by the first base station for use.

For example, if the UE informs the first base station that the current service scheduling requirement of the UE is that a quantity of services is 500 M, the first base station may correspondingly authorize the first spectrum resource based on transmission of a maximum quantity of services that can be provided by the base station for the UE. For example, if the first base station can provide the UE with a spectrum resource for transmission of a quantity of services of 350 M, the first spectrum resource authorized by the first base station for use may be a spectrum resource that can be for transmission of the quantity of services of 350 M. The first spectrum resource authorized by the first base station may be configured according to an actual situation, and is not limited to the example in this embodiment of this application.

Optionally, after authorizing the first spectrum resource to the UE for use, the first base station may make an identifier for the first spectrum resource, indicating that the first spectrum resource is no longer scheduled to another UE for use, so as to avoid a use conflict of the first spectrum resource.

S103: The UE sends a second request message to the second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station.

After accessing the second base station, the UE may send the second request message to the second base station. Optionally, the UE may determine, based on the first authorization message fed back by the first base station, a quantity of services that can be transmitted on the first spectrum resource, calculate, based on a total quantity of services that needs to be transmitted based on the current service scheduling requirement of the UE, a remaining quantity of services that needs to be transmitted, and request the second base station for a spectrum resource in a frequency band of the second base station by using the second request message based on the remaining quantity of services that needs to be transmitted. For example, the current service scheduling requirement of the UE is that a quantity of services of 500 M needs to be transmitted, if the first spectrum resource for a quantity of services of 350 M authorized by the first base station is obtained by using the first request message, the UE may request the second base station for the third spectrum resource of 150 M by using the second request message to perform service scheduling. Alternatively, after the UE sends, to the second base station, the first spectrum resource that has been authorized and the service scheduling requirement that are included, the second base station determines, based on a quantity of services that can be transmitted by using the first spectrum resource and a total quantity of services that needs to be transmitted by the UE based on the current service scheduling requirement, to provide the UE with a third spectrum resource on a frequency band supported by the second base station. For example, the current service scheduling requirement of the UE is that a quantity of services of 500 M needs to be transmitted, and the first spectrum resource for transmission of a service volume of 350 M authorized by the first base station is obtained by using the first request message. In this case, the UE may inform, by using the second request message, the second base station that the quantity of services of the first spectrum resource that has been authorized is 350 M, and the total quantity of services that needs to be transmitted based on the current service scheduling requirement is 500 M. In view of this, the second base station determines the third spectrum resource that authorizes the UE to transmit a quantity of services of 150 M.

Optionally, the second base station may be informed, by using the second request message or by using another message, of the total quantity of services needed for the current service scheduling requirement of the UE.

S104: The UE accepts service scheduling of the second base station on a second spectrum resource, where the second spectrum resource includes the first spectrum resource, or the second spectrum resource includes the first spectrum resource and the third spectrum resource, and the third spectrum resource is a spectrum resource authorized by the second base station for use.

After the UE informs the second base station of the first spectrum resource authorized by the first base station, the second base station may determine the second spectrum resource on the first spectrum resource and the third spectrum resource in a unified manner based on the first spectrum resource authorized by the first base station for the UE to use and in combination with available spectrum resources in the frequency band of the second base station and the service scheduling requirement of the UE, and perform service scheduling for the UE on the second spectrum resource.

Optionally, the second spectrum resource includes only the first spectrum resource, and the second spectrum resource includes the entire first spectrum resource and a part of the third spectrum resource. If the first spectrum resource is insufficient to satisfy the service scheduling requirement of the UE for a sufficient spectrum resource, the second spectrum resource determined by the second base station may include the entire first spectrum resource and the third spectrum resource allocated by the second base station for an insufficient part, to resolve a problem that a spectrum resource that can be provided by the first base station for a current service scheduling requirement of the UE is insufficient, effectively increase a total quantity of services of service scheduling, and resolve a problem of an insufficient bandwidth. If the first base station can provide a sufficient spectrum resource, the second spectrum resource may include only the first spectrum resource, and the first spectrum resource may also be scheduled by the second base station. In this way, it is more convenient for the UE to flexibly select base stations corresponding to different operators to perform service scheduling. For example, the UE may select a base station with a better signal strength to implement the current service scheduling requirement.

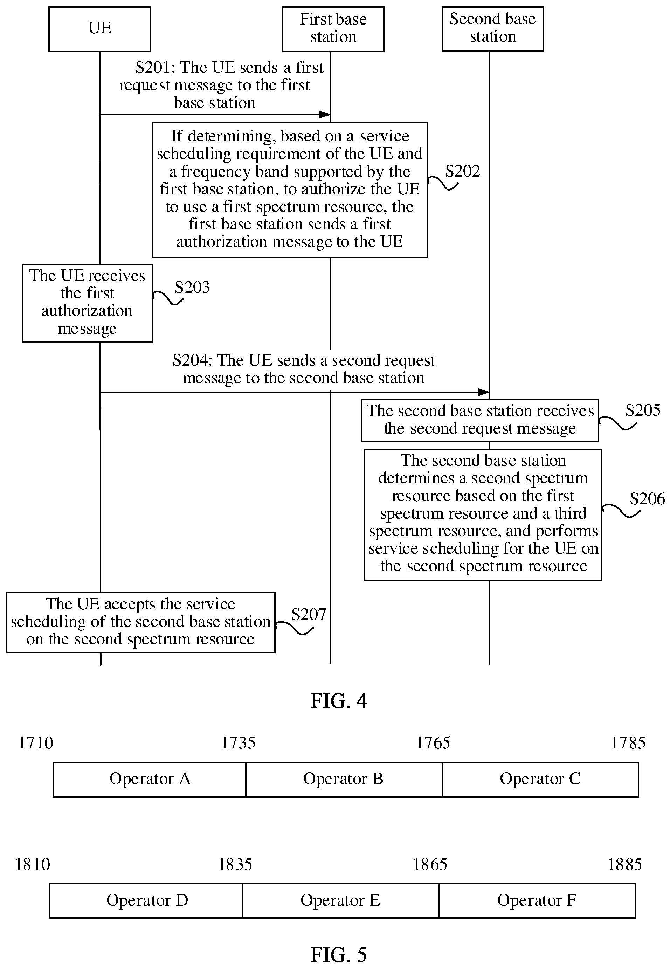

FIG. 4 is a schematic flowchart of another spectrum resource scheduling method according to an embodiment of this application. As shown in FIG. 4, the method is performed by a UE, a first base station, and a second base station, and includes but is not limited to steps S201 to S206.

S201: The UE sends a first request message to the first base station.

S202: If determining, based on a service scheduling requirement of the UE and a frequency band supported by the first base station, to authorize the UE to use a first spectrum resource, the first base station sends a first authorization message to the UE.

For content carried in the first request message and the first authorization message, refer to the foregoing example. Details are not described again. Time domain and frequency domain positions of the first spectrum resource may be authorized are included in the first authorization message.

After receiving the first request message of the UE, the first base station determines a quantity of services for the service scheduling requirement of the UE based on the first request message, and determines the first spectrum resource to be authorized to the UE in a spectrum resource that can be used in a frequency band allocated to an operator corresponding to the first base station.

To avoid a case in which base stations of a plurality of operators simultaneously transmit data on the first spectrum resource, the first base station no longer performs service scheduling on the first spectrum resource after authorization.

S203: The UE receives the first authorization message.

S204: The UE sends a second request message to the second base station.

For content carried in the second request message, refer to the foregoing example. Details are not described again.

Optionally, the second request message sent by the UE to the second base station may carry the time domain and frequency domain positions of a first frequency domain resource that are indicated in the first authorization message, to inform the second base station of the time domain and frequency domain positions of the first spectrum resource that has been authorized by the first base station for use. Alternatively, the UE separately sends a message to the second base station based on the first authorization message, to indicate the time domain and frequency domain positions of the first frequency domain resource that is authorized by the first base station for use.

S205: The second base station receives the second request message.

S206: The second base station determines a second spectrum resource based on the first spectrum resource and a third spectrum resource, and performs service scheduling for the UE on the second spectrum resource.

The second base station may determine the second spectrum resource based on the first spectrum resource and the third spectrum resource. For content of a spectrum resource included in the second spectrum resource, refer to the foregoing example. Details are not described again.

For example, the second base station determines, based on the second request message, a quantity of services needed for the service scheduling requirement of the UE and the time domain and frequency domain positions of the first spectrum resource that has been authorized by the first base station for use; determines time domain and frequency domain positions of the third spectrum resource based on a spectrum allocated to an operator corresponding to the second base station; then determines time domain and frequency domain positions of the second spectrum resource based on the first spectrum resource and the third spectrum resource and with reference to the method provided in the foregoing embodiment; and performs service scheduling for the UE at the time domain and frequency domain positions of the second spectrum resource.

In some examples, each operator independently constructs a network, operates independently, and has no interconnection or interworking. Therefore, when using a spectrum resource in a frequency band corresponding to an operator A, a second base station of an operator B may first perform synchronization. For example, both the first base station and the second base station are synchronized with a global navigation satellite system (Global Navigation Satellite System, GNSS), so that time-frequency synchronization can be ensured, and that the second base station can perform scheduling on the first spectrum resource is ensured, or that the second base station can perform uniform coordination and scheduling on the first spectrum resource and the third spectrum resource is ensured.

Further, frequency bands of the first spectrum resource and the third spectrum resource have the following four cases. When the second spectrum resource includes the first spectrum resource and the third spectrum resource, the second base station may perform different carrier aggregation (Carrier Aggregation, CA) in a case in which the first spectrum resource and the third spectrum resource belong to different frequency bands. If the frequency bands in which the first spectrum resource and the third spectrum resource are located are in different frequency domain ranges in a same band (band), with reference to FIG. 1, the first spectrum resource is a spectrum resource in a frequency band allocated to the operator A, and the third spectrum resource is a spectrum resource in a frequency band allocated to the operator B, the second base station may allocate the third spectrum resource adjacent to the first spectrum resource, in other words, the second spectrum resource may be used as an entire resource block for service scheduling, or service scheduling is performed through intra-band contiguous carrier aggregation (Intra-band Contiguous CA). If the third spectrum resource is not adjacent to the first spectrum resource, the second base station performs service scheduling through intra-band non-contiguous carrier aggregation (Intra-band Non-contiguous CA). If the frequency bands in which the first spectrum resource and the third spectrum resource are located are in different frequency domain ranges in a same band (band), with reference to FIG. 1, the first spectrum resource is a spectrum resource in a frequency band allocated to the operator A, and the third spectrum resource is a spectrum resource in a frequency band allocated to the operator C, the second base station may aggregate the first spectrum resource and the third spectrum resource into the second spectrum resource through intra-band non-contiguous carrier aggregation (Intra-band non-contiguous CA). If the first spectrum resource and the third spectrum resource belong to different bands (band), with reference to FIG. 5, the first spectrum resource is a spectrum resource in a frequency band allocated to the operator A, and the third spectrum resource is a spectrum resource in a frequency band allocated to an operator D, the second base station may aggregate the first spectrum resource and the third spectrum resource into the second spectrum resource through inter-band carrier aggregation (Inter-band CA) after obtaining a scheduling capability of another band (band).

S207: The UE accepts the service scheduling of the second base station on the second spectrum resource.

In a possible implementation, the second base station or a target base station reconfigures a BWP of the UE based on the second spectrum resource. For example, after obtaining the second spectrum resource through aggregation, the second base station may further modify or reconfigure the BWP of the UE based on the second spectrum resource, that is, a spectrum resource actually used for performing service scheduling for the UE, so that an allocated BWP conforms to UE transmit and receive bandwidths.

In this embodiment of this application, it is assumed that the UE has SIM cards of both the operator A and the operator B, which represents that the UE is qualified to request the operator A and the operator B for service scheduling on spectrum resources of the operator A and the operator B. The UE requests a first base station of the operator A for authorization of a spectrum resource and obtains authorization of use of the first spectrum resource, and the first base station no longer performs service scheduling on the first spectrum resource authorized by the first base station. Then, the UE informs a second base station of the operator B of the authorized first spectrum resource, and the second base station obtains a capability of scheduling the first spectrum resource of the operator A and a third spectrum resource of the operator B. In this way, the UE can obtain a spectrum resource needed for transmission of a larger quantity of services, and implement service transmission of a high rate and a large bandwidth in a network in a coverage area of the second base station. When a spectrum resource of a single operator is limited, a large-bandwidth service transmission requirement is satisfied.

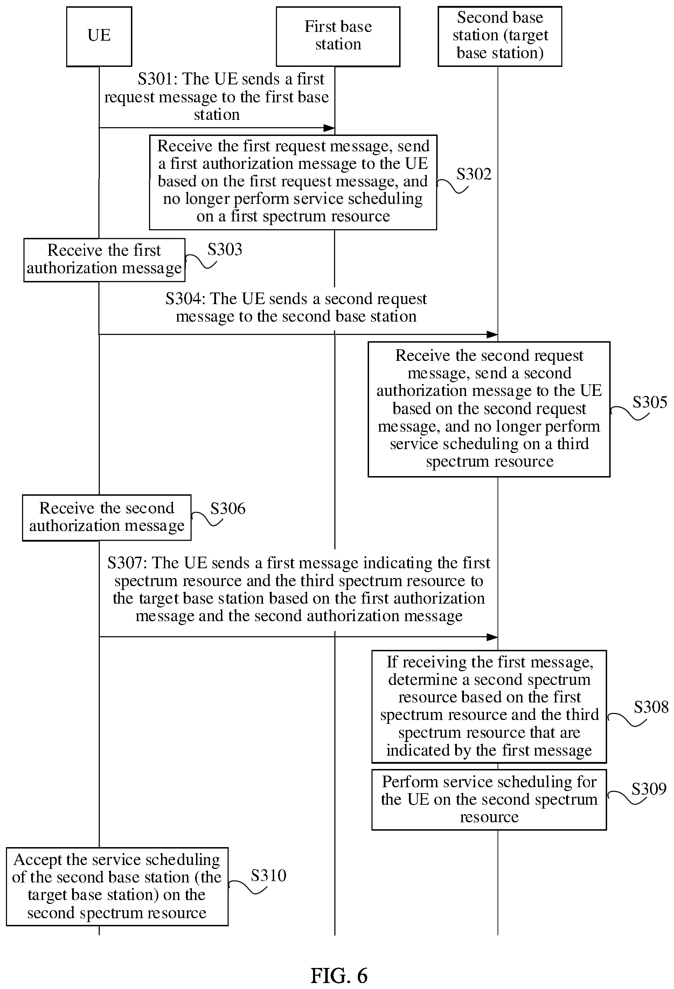

FIG. 6 is a schematic flowchart of another spectrum resource scheduling method according to an embodiment of this application. As shown in FIG. 6, the method is performed by a UE, a first base station, and a second base station, and includes but is not limited to steps S301 to S310.

For content carried in a first request message, a first authorization message, a second request message, a second authorization message, a first spectrum resource, a second spectrum resource, and a third spectrum resource in S301 to S308, refer to the foregoing descriptions. Details are not described again.

S301: The UE sends the first request message to the first base station.

S302: The first base station receives the first request message, sends the first authorization message to the UE based on the first request message, and no longer performs service scheduling on the first spectrum resource.

S303: The UE receives the first authorization message.

There is no sequence relationship between S301 and S304, and the first base station and the second base station have completed synchronization.

S304: The UE sends the second request message to the second base station.

S305: The second base station receives the second request message, sends the second authorization message to the UE based on the second request message, and no longer performs service scheduling on the third spectrum resource.

S306: The UE receives the second authorization message.

S307: The UE sends, to a target base station based on the first authorization message and the second authorization message, a first message indicating the first spectrum resource and the third spectrum resource.

The target base station is the first base station or the second base station. For example, the UE may select the target base station based on a network signal strength at a current position. For example, if determining that a network signal strength of the first base station is higher, the UE determines that the first base station is the target base station; or the UE may determine the target base station based on selection of a user (a user using the UE).

For ease of illustration (as shown in FIG. 6), in this embodiment of this application, an example in which the UE selects the second base station as the target base station is used for description. For details about that the UE selects the first base station as the target base station, refer to this example. Details are not described again.

The UE may determine time domain and frequency domain positions of the first spectrum resource based on the first authorization message, determine time domain and frequency domain positions of the third spectrum resource based on the second authorization message, and inform the target base station of information about the first spectrum resource and the third spectrum resource, that is, time domain and frequency domain information by using the first message.

S308: If receiving the first message, the second base station (the target base station) determines the second spectrum resource based on the first spectrum resource and the third spectrum resource that are indicated by the first message.

For the target base station determining the second spectrum resource based on the first message, refer to the method for determining the second spectrum resource in S103.

Optionally, the target base station may determine that the second spectrum resource includes the entire first spectrum resource. If the first spectrum resource is sufficient to satisfy a bandwidth of a service requirement of the UE, the entire first spectrum resource is configured in the second spectrum resource. If the first spectrum resource is insufficient to satisfy the bandwidth of the service requirement of the UE, the entire first spectrum resource and a part of the third spectrum resource are configured in the second spectrum resource, so that the second spectrum resource satisfies the bandwidth of the service requirement of the UE. Because the first base station has authorized the first spectrum resource to the second base station for use, and no longer transmits data on the first spectrum resource, the second base station fully uses the first spectrum resource to satisfy the service requirement of the UE, so that spectrum resources in the second base station can be effectively saved without causing a waste of resources, not only spectrum resource sharing between different operators can be implemented, but also spectrum resources can be saved to a maximum extent, and resource utilization can be improved.

S309: The second base station (the target base station) performs service scheduling for the UE on the second spectrum resource.

S310: The UE accepts the service scheduling of the second base station (the target base station) on the second spectrum resource.

In a possible implementation, the target base station reconfigures a BWP based on the second spectrum resource. For this step, refer to S207. After configuring the BWP, the target base station may configure, in the BWP, a time-frequency resource used for service transmission.

In some scenarios in which a wireless network is actually used, when the UE is located at an edge of a cell covered by a base station, even if a maximum bandwidth allocated to an operator corresponding to the base station is used, a code rate at the edge of the cell is still low, and it is insufficient to satisfy a large bandwidth service transmission requirement of the UE. Alternatively, when the UE is located in a cell center, a case in which a bandwidth requirement of the service scheduling requirement of the UE is greater than a network speed peak that can be provided by a base station at a current position still occurs, that is, the bandwidth requirement of the UE still cannot be satisfied. Considering that operators operate independently, if spectrum resources of different operators need to be shared, operators need to share and construct a network. However, inter-frequency networking is difficult, and problems such as poor network performance, complex network conditions, and high requirements for hardware devices in the network occur. Based on these problems, this embodiment of this application provides a method for implementing spectrum resource sharing through the UE. The UE triggers dynamic and uniform coordination and scheduling of spectrum resources between different operators, for example, the operator A and the operator B (in other words, unified scheduling of spectrum resources between different operators is implemented by using a spectrum resource authorized by the first base station or the second base station), and the different operators may still maintain independent operation. According to the method, a base station that performs service scheduling may flexibly configure a spectrum resource, to improve spectrum resource utilization and flexibility without affecting an existing network or changing spectrum resource allocation, and effectively resolve a problem that a bandwidth provided by an operator that operates independently for service scheduling of the UE is insufficient.

In addition, in this embodiment of this application, an example in which the UE has a capability of accessing base stations of two different operators is used. For example, SIM cards of two operators are installed on the UE. In actual application, if a wireless network includes three or more operators, with reference to the method, at least two operators authorize use of spectrum resources of the operators, and then another operator determines, based on the spectrum resources that have been authorized, a spectrum resource for final service scheduling. This is not limited to the scheduling method for authorized spectrum resources of two operators listed in this embodiment of this application.

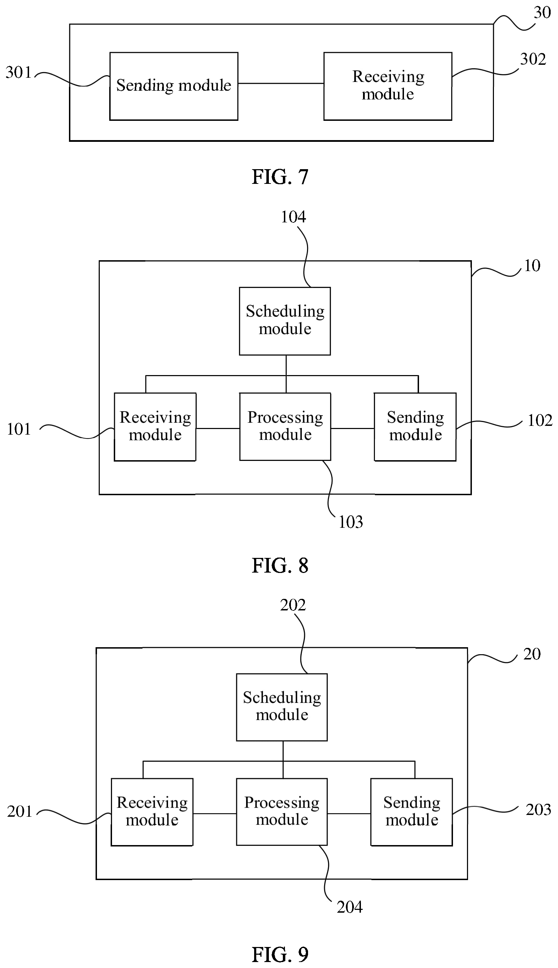

An embodiment of this application provides a UE. FIG. 7 is a diagram of a structure of a UE according to an embodiment of this application. As shown in FIG. 7, the UE 30 includes a sending module 301 and a receiving module 302.

The sending module 301 is configured to send a first request message to a first base station, where the first request message is used for requesting the first base station to authorize use of a first spectrum resource, and the first spectrum resource is determined based on a service scheduling requirement and a frequency band supported by the first base station.

The receiving module 302 is configured to receive a first authorization message, where the first authorization message indicates the first spectrum resource that is authorized by the first base station for use.

The sending module 301 is further configured to send a second request message to the second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station.

The receiving module 302 is further configured to accept service scheduling of the second base station on a second spectrum resource, where the second spectrum resource includes the first spectrum resource, or the second spectrum resource includes the first spectrum resource and the third spectrum resource.

In a possible implementation, the receiving module 302 is further configured to receive a second authorization message, where the second authorization message indicates the third spectrum resource that is authorized by the second base station for use. The sending module 301 is further configured to send, to a target base station based on the first authorization message and the second authorization message, a first message indicating the first spectrum resource and the third spectrum resource, to cause the target base station to determine the second spectrum resource based on the first message and perform service scheduling on the second spectrum resource, where the target base station is the first base station or the second base station. The receiving module 302 is further configured to accept the service scheduling of the target base station on the second spectrum resource.

In a possible implementation, the first spectrum resource and the third spectrum resource may be adjacent spectrum resources, and the second spectrum resource may be obtained in different CA manners with reference to FIG. 5.

It should be understood that the modules shown in FIG. 7 are merely examples. The sending module 301 and the receiving module 302 may perform operations thereof with reference to the method part in embodiments of this application, or perform variations of the operations thereof. For example, in the method provided in FIG. 2, FIG. 4, or FIG. 6 that is applicable to the UE 30, the sending module 301 and the receiving module 302 may be used as the UE to perform operations of the UE, or perform variations of the operations of the UE. Details are not described again.

An embodiment of this application provides a first base station. FIG. 8 is a diagram of a structure of a first base station according to an embodiment of this application. As shown in FIG. 8, the first base station 10 includes a receiving module 101, a sending module 102, a processing module 103, and a scheduling module 104.

The receiving module 101 is configured to receive a first request message sent by a UE, where the first request message is used for requesting the first base station to authorize use of a first spectrum resource.

The sending module 102 is configured to: if the processing module 103 determines, based on a service scheduling requirement of the UE and a frequency band supported by the first base station, to authorize the UE to use the first spectrum resource, send a first authorization message to the UE, where the first authorization message indicates the first spectrum resource that is authorized by the first base station for use.

In a possible implementation, the processing module 103 is further configured to: if the receiving module 101 receives a first message, determine a second spectrum resource based on the first spectrum resource and a third spectrum resource that are indicated by the first message, where the first message is obtained by the UE based on the first authorization message and a second authorization message that are received; the second spectrum resource includes the first spectrum resource, or the second spectrum resource includes the first spectrum resource and the third spectrum resource; the second authorization message is sent by a second base station to the UE based on a second request message of the UE; and the third spectrum resource is a spectrum resource authorized by the second base station for use. The scheduling module 104 is configured to perform service scheduling for the UE on the second spectrum resource.

In a possible implementation, the processing module 103 is further configured to reconfigure a BWP of the UE based on the second spectrum resource.

It should be understood that the modules shown in FIG. 8 are merely examples. The receiving module 101, the sending module 102, the processing module 103, and the scheduling module 104 may perform operations thereof with reference to the method part in embodiments of this application, or perform variations of the operations thereof. For example, in the method provided in FIG. 2, FIG. 4, or FIG. 6 that is applicable to the first base station 10, the receiving module 101, the sending module 102, the processing module 103, and the scheduling module 104 may be used as the first base station to perform operations of the first base station, or perform variations of the operations of the first base station. Details are not described again.

An embodiment of this application provides a second base station. FIG. 9 is a diagram of a structure of a second base station according to an embodiment of this application. As shown in FIG. 9, the second base station 20 includes a receiving module 201, a scheduling module 202, a sending module 203, and a processing module 204.

The receiving module 201 is configured to receive a second request message sent by a UE, where the second request message is used for requesting the second base station to authorize use of a third spectrum resource and informing the second base station of a first spectrum resource that has been authorized for use, the third spectrum resource is determined based on a service scheduling requirement and a frequency band supported by the second base station, and the first spectrum resource is determined by a first base station based on the service scheduling requirement and a frequency band supported by the first base station.

The scheduling module 202 is configured to perform service scheduling for the UE on a second spectrum resource based on the second request message, where the second spectrum resource includes the first spectrum resource, or the second spectrum resource includes the first spectrum resource and the third spectrum resource.

In a possible implementation, the sending module 203 is configured to send a second authorization message to the UE, where the second authorization message indicates the third spectrum resource that is authorized by the second base station for use. The processing module 204 is further configured to: if the receiving module 201 receives a first message, determine the second spectrum resource based on the first spectrum resource and the third spectrum resource that are indicated by the first message, where the first message is obtained by the UE based on a first authorization message and the second authorization message that are received, the first authorization message is sent by the first base station to the UE based on a first request message of the UE, and the first request message is used for requesting the first base station to authorize the use of the first spectrum resource. The scheduling module 202 is further configured to perform service scheduling for the UE on the second spectrum resource determined by the processing module 204.

In a possible implementation, the processing module 204 is further configured to reconfigure a BWP of the UE based on the second spectrum resource.

It should be understood that the modules shown in FIG. 9 are merely examples. The receiving module 201, the scheduling module 202, the sending module 203, and the processing module 204 may perform operations thereof with reference to the method part in embodiments of this application, or perform variations thereof. For example, in the method provided in FIG. 2, FIG. 4, or FIG. 6 that is applicable to the second base station 20, the receiving module 201, the scheduling module 202, the sending module 203, and the processing module 204 may be used as the second base station to perform operations of the second base station, or perform variations of the operations of the second base station. Details are not described again.

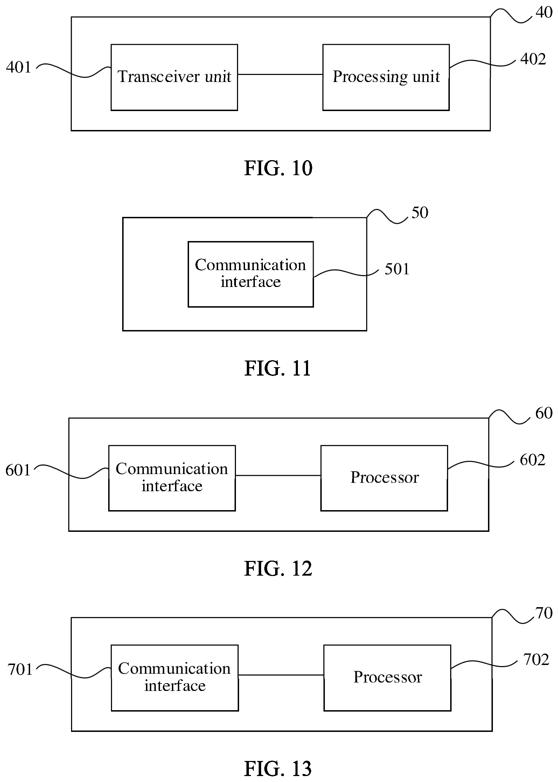

In addition, FIG. 10 is a diagram of a structure of an apparatus 40 according to an embodiment of this application. The apparatus 40 shown in FIG. 10 includes a transceiver unit 401 and a processing unit 402. The apparatus 40 may be configured to perform the method S101 to S104, S201 to S207, or S301 to S310 in the foregoing embodiments. When the apparatus 40 is configured to send a first request message to a first base station, where the first request message is used for requesting the first base station to authorize use of a first spectrum resource, and the first spectrum resource is determined based on a service scheduling requirement and a frequency band supported by the first base station; receive a first authorization message, where the first authorization message indicates the first spectrum resource that is authorized by the first base station for use; send a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and accept scheduling of the second spectrum resource on a second base station, where the second spectrum resource includes the first spectrum resource, or when the second spectrum resource includes the first spectrum resource and the third spectrum resource, the apparatus 40 is equivalent to the UE illustrated in the method. When the apparatus 40 is configured to receive a first request message sent by a user equipment UE, where the first request message is used for requesting a first base station to authorize use of a first spectrum resource; and if determining, based on a service scheduling requirement of the UE and a frequency band supported by the first base station, to authorize the UE to use the first spectrum resource, send a first authorization message to the UE, where the first authorization message indicates the first spectrum resource that is authorized by the first base station for use. The apparatus 40 is equivalent to the first base station illustrated in the method. When the apparatus 40 is configured to receive a second request message sent by a user equipment UE, where the second request message is used for requesting a second base station to authorize use of a third spectrum resource and informing the second base station of a first spectrum resource that has been authorized for use, the third spectrum resource is determined based on a service scheduling requirement and a frequency band supported by the second base station, and the first spectrum resource is determined by a first base station based on the service scheduling requirement and a frequency band supported by the first base station; and perform service scheduling for the UE on a second spectrum resource based on the second request message. The apparatus 40 is equivalent to the second base station illustrated in the method.

It should be noted that, in embodiments of this application, division into the units is an example, and is merely a logical function division. In actual implementation, another division manner may be used. Functional units in embodiments of this application may be integrated into one processing unit, or each of the units may exist alone physically, or two or more units may be integrated into one unit. For example, in the foregoing embodiment, the transceiver unit 401 and the processing unit 402 may be a same unit or different units. The integrated unit may be implemented in the form of hardware, for example, a chip, or may be implemented in a form of a software functional unit.

In addition, an embodiment of this application further provides a first device 50. FIG. 11 is a diagram of a structure of the first device 50 according to an embodiment of this application. The first device 50 includes a communication interface 501. The communication interface 501 may be an apparatus, for example, a transceiver. The communication interface 501 may be configured to perform the method in the foregoing embodiments, for example, may be configured to send a first request message to a first base station, where the first request message is used for requesting the first base station to authorize use of a first spectrum resource, and the first spectrum resource is determined based on a service scheduling requirement and a frequency band supported by the first base station; receive a first authorization message, where the first authorization message indicates the first spectrum resource that is authorized by the first base station for use; send a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and accept scheduling of the second base station on a second spectrum resource, where the second spectrum resource includes the first spectrum resource, or the second spectrum resource includes the first spectrum resource and the third spectrum resource. Specifically, the communication interface 501 performs operations of the UE in the method S101 to S104, S201 to S207, or S301 to S310.

An embodiment of this application further provides a second device 60. FIG. 12 is a diagram of a structure of the second device 60 according to an embodiment of this application. The second device 60 includes a communication interface 601 and a processor 602 connected to the communication interface 601. The communication interface 601 may be an apparatus, for example, a transceiver. The communication interface 601 may be configured to perform the method in the foregoing embodiments. The communication interface 601 may be configured to receive a first request message sent by a UE, where the first request message is used for requesting a first base station to authorize use of a first spectrum resource; and if determining, based on a service scheduling requirement of the UE and a frequency band supported by the first base station, to authorize the UE to use the first spectrum resource, send a first authorization message to the UE, where the first authorization message indicates the first spectrum resource that is authorized by the first base station for use. Specifically, the communication interface 601 performs operations of the first base station in the method S101 to S104, S201 to S207, or S301 to S310, and the processor 602 is configured to perform an operation other than sending and receiving operations performed by the first base station in the method.

An embodiment of this application further provides a third device 70. FIG. 13 is a diagram of a structure of a second device 70 according to an embodiment of this application. The second device 70 includes a communication interface 701 and a processor 702 connected to the communication interface 701. The communication interface 701 may be an apparatus, for example, a transceiver. The communication interface 701 may be configured to perform the method in the foregoing embodiments, and the processor 702 may be configured to perform service scheduling for the UE on a second spectrum resource based on the second request message, where the second spectrum resource includes the first spectrum resource, or the second spectrum resource includes the first spectrum resource and the third spectrum resource. Specifically, the communication interface 701 performs operations of the second base station in the method S101 to S104, S201 to S207, or S301 to S310, and the processor 702 is configured to perform an operation other than sending and receiving operations performed by the second base station in the method.

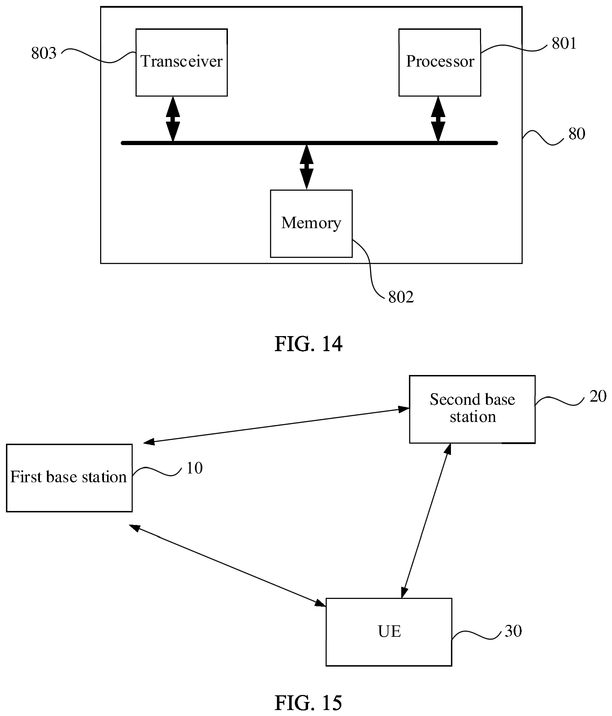

In addition, an embodiment of this application further provides a device 80. FIG. 14 is a diagram of a structure the device 80 according to an embodiment of this application. As shown in FIG. 13, the device 80 may include a processor 801, a memory 802 coupled to the processor 801, and a transceiver 803. The transceiver 803 may be a communication interface, an optical module, or the like, and is configured to receive a packet, data information, or the like. The processor 801 may be a central processing unit (Central Processing Unit, CPU), a network processor (Network Processor, NP), or a combination of the CPU and the NP, and is configured to perform steps related to forwarding processing in the device described in the example in the foregoing embodiments. The processor may alternatively be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), generic array logic (Generic Array Logic, GAL), or any combination thereof. The processor 801 may be one processor, or may include a plurality of processors. The memory 802 may include a volatile memory (volatile memory), for example, a random-access memory (Random-Access Memory, RAM). The memory may also include a non-volatile memory (non-volatile memory), for example, a read-only memory (Read-Only Memory, ROM), a flash memory (flash memory), a hard disk drive (Hard Disk Drive, HDD), or a solid-state drive (Solid-State Drive, SSD). The memory 802 may further include a combination of the foregoing types of memories. The memory 802 may be one memory, or may include a plurality of memories, and is configured to store program instructions. In an implementation, the memory 802 stores computer-readable instructions, and the computer-readable instructions include a plurality of software modules, for example, a sending module, a processing module, and a receiving module. After executing each software module, the processor 801 may perform a corresponding operation based on an indication of each software module. In this embodiment, an operation performed by a software module is actually an operation performed by the processor 801 based on the indication of the software module. Optionally, the processor 801 may also store program code or instructions for performing the solutions in embodiments of this application. In this case, the processor 801 does not need to read the program code or the instructions from the memory 802.

The device 80 may be configured to perform the method in the foregoing embodiments. Specifically, the device 80 may be used as a UE, a first base station, or a second base station to perform operations of the method S101 to S104, or the device 80 may be used as a third apparatus to perform the method S301 and S302, and the third apparatus performs operations of corresponding devices in S101 to S104, S201 to S207, or S301 to S310. For example, when the device 80 is used as a UE, the transceiver 803 is configured to send a first request message to a first base station, where the first request message is used for requesting the first base station to authorize use of a first spectrum resource, and the first spectrum resource is determined based on a service scheduling requirement and a frequency band supported by the first base station; receive a first authorization message, where the first authorization message indicates the first spectrum resource that is authorized by the first base station for use; send a second request message to a second base station, where the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and accept service scheduling of the second base station on a second spectrum resource, where the second spectrum resource includes the first spectrum resource, or the second spectrum resource includes the first spectrum resource and the third spectrum resource. When the device 80 is used as the first base station for execution, the processor 801 is configured to receive the first request message sent by the user equipment UE provided in this embodiment, where the first request message is used for requesting the first base station to authorize use of a first spectrum resource; and if determining, based on a service scheduling requirement of the UE and a frequency band supported by the first base station, to authorize the UE to use the first spectrum resource, send a first authorization message to the UE, where the first authorization message indicates the first spectrum resource that is authorized by the first base station for use. When the device 80 is used as a second base station for execution, the transceiver 803 is configured to receive a second request message sent by a UE, where the second request message is used for requesting the second base station to authorize use of a third spectrum resource and informing the second base station of a first spectrum resource that has been authorized for use, the third spectrum resource is determined based on a service scheduling requirement and a frequency band supported by the second base station, and the first spectrum resource is determined by a first base station based on the service scheduling requirement and a frequency band supported by the first base station. The processor 801 is configured to perform service scheduling for the UE on a second spectrum resource based on the second request message, where the second spectrum resource includes the first spectrum resource, or the second spectrum resource includes the first spectrum resource and the third spectrum resource.

An embodiment of this application further provides a computer-readable storage medium. The computer-readable storage medium stores instructions. When the instructions are run on a processor, some or all operations in any method according to any one of the foregoing embodiments are implemented.

An embodiment of this application further provides a computer program product, including a computer program. When the computer program is run on a processor, some or all operations in any method according to any one of the foregoing embodiments are implemented.

An embodiment of this application further provides a system. FIG. 15 is a diagram of a structure of a system according to an embodiment of this application. The system includes a first base station 10, a second base station 20, and a UE 30. The first base station 10 is the first base station corresponding to the structure shown in FIG. 8, FIG. 10, FIG. 12, or FIG. 14, and the second base station 20 is the second base station corresponding to the structure shown in FIG. 9, FIG. 10, FIG. 12, or FIG. 14. The UE 30 is the UE corresponding to the structure shown in FIG. 7, FIG. 10, FIG. 12, or FIG. 14. The system is configured to implement some or all operations in any method according to any one of the foregoing embodiments.

An embodiment of this application further provides another communication system, including at least one memory and at least one processor. The at least one memory stores instructions, and the at least one processor executes the instructions, so that the communication system implements some or all operations in any method according to any one of the foregoing embodiments.

An embodiment of this application further provides a chip, including an interface circuit and a processor. The interface circuit is connected to the processor, and the processor is configured to cause the chip to perform some or all operations in any method according to any one of the foregoing embodiments.

An embodiment of this application further provides a chip system, including a processor. The processor is coupled to a memory. The memory is configured to store a program or instructions. When the program or the instructions are executed by the processor, the chip system is caused to implement some or all operations in any method according to any one of the foregoing embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-volatile processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be an FPGA, an ASIC, a system on chip (System On Chip, SoC), a CPU, an NP, a digital signal processing circuit (Digital Signal Processor, DSP), a micro controller unit (Micro Controller Unit, MCU), a programmable controller (Programmable Logic Device, PLD), or another integrated chip.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include", "have" and any other variants are intended to cover the nonexclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in the form of hardware, or may be implemented in a form of a software service unit.

When the integrated unit is implemented in a form of a software service unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM (Random Access Memory), a magnetic disk, or an optical disc.

A person skilled in the art should be aware that, in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that causes a computer program to be transmitted from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements may be made to some technical features, without departing from the scope of the technical solutions of embodiments of this application.

## Claims

1. A spectrum resource scheduling method, comprising:
sending a first request message to a first base station, wherein the first request message is used for requesting the first base station to authorize use of a first spectrum resource, and the first spectrum resource is determined based on a service scheduling requirement and a frequency band supported by the first base station;
receiving a first authorization message, wherein the first authorization message indicates the first spectrum resource that is authorized by the first base station for use;
sending a second request message to a second base station, wherein the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and
accepting service scheduling of the second base station on a second spectrum resource, wherein the second spectrum resource comprises the first spectrum resource, or the second spectrum resource comprises the first spectrum resource and the third spectrum resource.

2. The method according to claim 1, further comprising:
receiving a second authorization message, wherein the second authorization message indicates the third spectrum resource that is authorized by the second base station for use;
sending, to the target base station based on the first authorization message and the second authorization message, a first message indicating the first spectrum resource and the third spectrum resource, to cause the target base station to determine the second spectrum resource based on the first message and perform service scheduling on the second spectrum resource, wherein the target base station is the first base station or the second base station; and
accepting the service scheduling of the target base station on the second spectrum resource.

3. A spectrum resource scheduling method, comprising:
receiving a first request message from a user equipment UE, wherein the first request message is used for requesting a first base station to authorize use of a first spectrum resource; and
if determining, based on a service scheduling requirement of the UE and a frequency band supported by the first base station, to authorize the UE to use the first spectrum resource, sending a first authorization message to the UE, wherein the first authorization message indicates the first spectrum resource that is authorized by the first base station for use.

4. The method according to claim 3, further comprising:
if receiving a first message, determining a second spectrum resource based on the first spectrum resource and a third spectrum resource that are indicated by the first message, wherein the first message is obtained by the UE based on the first authorization message and a second authorization message that are received; the second spectrum resource comprises the first spectrum resource, or the second spectrum resource comprises the first spectrum resource and the third spectrum resource; the second authorization message is from a second base station to the UE based on a second request message of the UE; and the third spectrum resource is a spectrum resource authorized by the second base station for use; and
performing service scheduling for the UE on the second spectrum resource.

5. The method according to claim 4, further comprising:
reconfiguring a bandwidth part BWP of the UE based on the second spectrum resource.

6. A spectrum resource scheduling method, comprising:
receiving a second request message from a user equipment UE, wherein the second request message is used for requesting a second base station to authorize use of a third spectrum resource and informing the second base station of the first spectrum resource that has been authorized for use, the third spectrum resource is determined based on the service scheduling requirement and a frequency band supported by the second base station, and the first spectrum resource is determined by a first base station based on the service scheduling requirement and a frequency band supported by the first base station; and
performing service scheduling for the UE on a second spectrum resource based on the second request message, wherein the second spectrum resource comprises the first spectrum resource, or the second spectrum resource comprises the first spectrum resource and the third spectrum resource.

7. The method according to claim 6, further comprising:
sending a second authorization message to the UE, wherein the second authorization message indicates the third spectrum resource that is authorized by the second base station for use;
if receiving a first message, determining the second spectrum resource based on the first spectrum resource and the third spectrum resource that are indicated by the first message, wherein the first message is obtained by the UE based on a first authorization message and the second authorization message that are received, the first authorization message is sent by the first base station to the UE based on a first request message of the UE, and the first request message is used for requesting the first base station to authorize use of the first spectrum resource; and
performing service scheduling for the UE on the second spectrum resource.

8. The method according to claim 6 or 7, further comprising:
reconfiguring a bandwidth part BWP of the UE based on the second spectrum resource.

9. A user equipment UE, comprising:
a sending module, configured to send a first request message to a first base station, wherein the first request message is used for requesting the first base station to authorize use of a first spectrum resource, and the first spectrum resource is determined based on a service scheduling requirement and a frequency band supported by the first base station; and
a receiving module, configured to receive a first authorization message, wherein the first authorization message indicates the first spectrum resource that is authorized by the first base station for use, wherein
the sending module is further configured to send a second request message to a second base station, wherein the second request message is used for requesting the second base station to authorize use of a third spectrum resource and informing the second base station of the first spectrum resource that has been authorized for use, and the third spectrum resource is determined based on the service scheduling requirement and a frequency band supported by the second base station; and
the receiving module is further configured to accept service scheduling of the second base station on a second spectrum resource, wherein the second spectrum resource comprises the first spectrum resource, or the second spectrum resource comprises the first spectrum resource and the third spectrum resource.

10. The UE according to claim 9, wherein
the receiving module is further configured to receive a second authorization message, wherein the second authorization message indicates the third spectrum resource that is authorized by the second base station for use;
the sending module is further configured to send, to the target base station based on the first authorization message and the second authorization message, a first message indicating the first spectrum resource and the third spectrum resource, to cause the target base station to determine the second spectrum resource based on the first message and perform service scheduling on the second spectrum resource, wherein the target base station is the first base station or the second base station; and
the receiving module is further configured to accept the service scheduling of the target base station on the second spectrum resource.

11. A first base station, comprising:
a receiving module, configured to receive a first request message sent by a user equipment UE, wherein the first request message is used for requesting the first base station to authorize use of a first spectrum resource; and
a sending module, configured to: if a processing module determines, based on a service scheduling requirement of the UE and a frequency band supported by the first base station, to authorize the UE to use the first spectrum resource, send a first authorization message to the UE, wherein the first authorization message indicates the first spectrum resource that is authorized by the first base station for use.

12. The first base station according to claim 11, further comprising:
the processing module, further configured to: if the receiving module receives a first message, determine a second spectrum resource based on the first spectrum resource and a third spectrum resource that are indicated by the first message, wherein the first message is obtained by the UE based on the first authorization message and a second authorization message that are received; the second spectrum resource comprises the first spectrum resource, or the second spectrum resource comprises the first spectrum resource and the third spectrum resource; the second authorization message is sent by a second base station to the UE based on a second request message of the UE; and the third spectrum resource is a spectrum resource authorized by the second base station for use; and
a scheduling module, configured to perform service scheduling for the UE on the second spectrum resource.

13. The first base station according to claim 12, wherein
the processing module is further configured to reconfigure a bandwidth part BWP of the UE based on the second spectrum resource.

14. A second base station, comprising:
a receiving module, configured to receive a second request message sent by a user equipment UE, wherein the second request message is used for requesting the second base station to authorize use of a third spectrum resource and informing the second base station of the first spectrum resource that has been authorized for use, the third spectrum resource is determined based on the service scheduling requirement and a frequency band supported by the second base station, and the first spectrum resource is determined by a first base station based on the service scheduling requirement and a frequency band supported by the first base station; and
a scheduling module, configured to perform service scheduling for the UE on a second spectrum resource based on the second request message, wherein the second spectrum resource comprises the first spectrum resource, or the second spectrum resource comprises the first spectrum resource and the third spectrum resource.

15. The second base station according to claim 14, further comprising:
a sending module, configured to send a second authorization message to the UE, wherein the second authorization message indicates the third spectrum resource that is authorized by the second base station for use; and
a processing module, further configured to: if the receiving module receives a first message, determine the second spectrum resource based on the first spectrum resource and the third spectrum resource that are indicated by the first message, wherein the first message is obtained by the UE based on a first authorization message and the second authorization message that are received, the first authorization message is sent by the first base station to the UE based on a first request message of the UE, and the first request message is used for requesting the first base station to authorize use of the first spectrum resource.

16. The second base station according to claim 14 or 15, wherein
the processing module is further configured to reconfigure a bandwidth part BWP of the UE based on the second spectrum resource.

17. A system, comprising:
the user equipment UE according to claim 9 or 10;
the first base station according to any one of claims 11 to 13; and
the second base station according to any one of claims 14 to 16.

18. A computer-readable storage medium, wherein
the computer-readable medium stores a computer program; and
when the computer program runs on a computer, the computer is caused to perform the method according to claim 1 or 2, perform the method according to any one of claims 3 to 5, or perform the method according to any one of claims 6 to 8.

19. A computer program product, comprising a computer program, wherein when the computer program is executed, the method according to claim 1 or 2, the method according to any one of claims 3 to 5, or the method according to any one of claims 6 to 8 is implemented.
